# EUROPEAN PATENT APPLICATION

(11) **EP 4 164 246 A1**
(43) Date of publication of application: **12.04.2023**
(21) Application number: 21842350.7
(22) Date of filing: 19.02.2021
(51) Int. Cl.: H04R 19/04

(54) **SOUND COLLECTION DEVICE, SOUND PROCESSING APPARATUS AND METHOD, DEVICE, AND STORAGE MEDIUM**

(30) Priority: 17.07.2020 CN 202010694657
(71) Applicant: GMEMS Tech Shenzhen Limited, Shenzhen, Guangdong 518000 (CN)
(72) Inventor: WANG, Yunlong, Shenzhen, Guangdong 518000 (CN); WU, Qingxiang, Shenzhen, Guangdong 518000 (CN); ZHU, Qibin, Shenzhen, Guangdong 518000 (CN)
(74) Representative: Gulde & Partner
(86) International application number: PCT/CN2021/076946
(87) International publication number: WO 2022/012042

(57) **Abstract**

Embodiments of the present application provide a sound collection device, a sound processing apparatus and method, a device, and a storage medium. The sound collection device comprises a housing and a silicon-based microphone device located in the housing. The silicon-based microphone device comprises a circuit board and an even number of silicon-based microphone chips provided on one side of the circuit board; the circuit board is provided with an even number of sound inlet holes, and the even number of sound inlet holes have one-to-one correspondence to back cavities of the even number of silicon-based microphone chips; the housing is provided with sound channels in communication with the sound inlet holes in one-to-one correspondence; the correspondingly communicated back cavities and the sound inlet holes form acoustic cavities; or, the correspondingly communicated back cavities, sound inlet holes, and sound channels form acoustic cavities; and at least two acoustic cavities have different volumes and/or shapes. The sound collection device provided in the embodiments of the present application can more easily output only near-field audio reference signals according to collected environmental sound, or output only near-field audio reference signals with the cooperation of the subsequent signal processing apparatus.

## Description

### CROSS-REFERENCE TO RELATED APPLICATION

This application claims priority to Chinese Patent Application No. 2020106946578 filed on July 17, 2020 in the China National Intellectual Property Administration, the disclosure of which is hereby incorporated by reference in its entirety.

### TECHNICAL FIELD

The present application relates to a field of acousto-electric conversion technology, and specifically, the present application relates to a sound collection device, a sound processing apparatus and method, a device, and a storage medium.

### BACKGROUND

In intelligent voice interaction, an intelligent device generally collects sound through a pickup microphone and converts the sound into an audio signal for the intelligent device to recognize, after which the intelligent device makes a corresponding interactive action.

However, the sound collected by the pickup microphone usually includes not only valid voice, but also invalid noise, which may reduce the recognition accuracy of the valid voice, and even may lead to the voice recognition failure and may block the intelligent voice interaction.

### SUMMARY

In view of the shortcomings of the existing methods, the present application provides a sound collection device, a sound processing apparatus and method, a device, and a storage medium to address the technical problem of low recognition accuracy of valid voice in existing intelligent voice interaction.

In a first aspect, an embodiment of the present application provides a sound collection device, including a housing and a silicon-based microphone device located within the housing; wherein the silicon-based microphone device includes a circuit board and an even number of silicon-based microphone chips provided on one side of the circuit board; the circuit board is provided with an even number of sound inlet holes, and the even number of sound inlet holes are communicated with back cavities of the even number of silicon-based microphone chips in one-to-one correspondence; the housing is provided with a sound channel in communication with a corresponding one of the sound inlet holes in one-to-one correspondence; the correspondingly communicated back cavity and sound inlet hole form an acoustic cavity; or, the correspondingly communicated back cavity, sound inlet hole and sound channel form an acoustic cavity; and at least two acoustic cavities have different volumes and/or shapes.

In a second aspect, an embodiment of the present application provides a sound processing apparatus, including a microphone, an echo processor, and a sound collection device as provided in the above first aspect; wherein an output end of the microphone is electrically connected to an input end of the echo processor, and an output end of the sound collection device is electrically connected to another input end of the echo processor, and an output end of the echo processor is configured to output a far-field audio signal.

In a third aspect, an embodiment of the present application provides a sound processing method, including: obtaining a real-time near-field audio reference signal by using a sound collection device as provided in the above first aspect; obtaining a real-time mixed audio signal; and removing a real-time near-field audio signal from the real-time mixed audio signal according to the real-time near-field audio reference signal to obtain a real-time far-field audio signal.

In a fourth aspect, an embodiment of the present application provides a sound processing apparatus, including: an audio signal collection module configured to obtain a real-time near-field audio reference signal and a real-time mixed audio signal; and an audio signal processing module configured to remove a real-time near-field audio signal from the real-time mixed audio signal according to the real-time near-field audio reference signal to obtain a real-time far-field audio signal.

In a fifth aspect, an embodiment of the present application provides a computer-readable storage medium, having a computer program stored thereon, wherein the computer program, when executed by an electronic device, implements a sound processing method as provided in the third aspect.

The beneficial technical effects brought about by the sound collection device according to the embodiments of the present application includes that: an even number of silicon-based microphone chips are used to collect ambient sound, and among the acoustic cavities used to conduct the ambient sound to the corresponding silicon-based microphone chips, at least two of the acoustic cavities have different volumes and/or shapes. Thus, it may contribute to generation of a path difference in the aforementioned at least two acoustic cavities for the near-field sound in the ambient sound. That is, the near-field sound acts on the corresponding two silicon-based microphone chips with a different amplitude or phase and thus the near-field sound on the corresponding two silicon-based microphone chips may not be counteracted each other. However, the far-field sound in the ambient sound does not generate a significant path difference in the aforementioned at least two acoustic cavities. That is, it may deem that the far-field sound acts on the corresponding two silicon-based microphone chips with a same amplitude or phase and thus the far-field sound on the corresponding two silicon-based microphone chips may be counteracted each other. Therefore, the sound collection device according to the embodiments of the present application may more easily output only the near-field audio reference signal according to the collected ambient sound, or more easily output only the near-field audio reference signal after a signal processing via a subsequent signal processing apparatus.

The beneficial technical effects brought about by the sound processing apparatus and method, device, and computer-readable storage medium according to embodiments of the present application includes that: by using the microphone to collect the ambient sound and performing an acousto-electric conversion thereon to obtain a mixed audio signal; using the sound collection device according to the embodiments of the present application to obtain, or in cooperation with, for example, the echo processor to obtain the near-field audio reference signal; and using the near-field audio reference signal as a noise reference signal, it is more easily or more accurately to remove the near-field audio signal from the mixed audio signal to obtain the far-field audio signal, thereby improving the accuracy of the far-field audio signal greatly.

Additional aspects and advantages of the present application will be given partially in the following description, which will become apparent from the following description, or from the practice of the present application.

### BRIEF DESCRIPTION OF DRAWINGS

The foregoing and/or additional aspects and advantages of the present application will become apparent and easily understood from the following description of embodiments in conjunction with the accompanying drawings, wherein:
FIG. 1 is a schematic diagram showing a structural framework of a sound processing apparatus according to an embodiment of the present application;
FIG. 2 is a schematic diagram showing the structure of a sound collection device and a speaker in a sound processing apparatus integrated and arranged within a housing of the sound processing apparatus according to an embodiment of the present application;
FIG. 3 is a schematic diagram showing an implementation of an internal structure of a sound collection device according to an embodiment of the present application;
FIG. 4 is a schematic diagram showing an implementation of the internal structure of a sound collection device according to an embodiment of the present application;
FIG. 5 is a schematic diagram showing an implementation of the internal structure of a sound collection device according to an embodiment of the present application;
FIG. 6 is a schematic diagram showing an internal structure of a silicon-based microphone device according to an embodiment of the present application;
FIG. 7 is a schematic diagram showing the structure of a single differential silicon-based microphone chip in a silicon-based microphone device according to an embodiment of the present application;
FIG. 8 is a schematic diagram showing an electrical connection of two differential silicon-based microphone chips in a silicon-based microphone device according to an embodiment of the present application;
FIG. 9 is a schematic flow diagram showing a sound processing method according to an embodiment of the present application; and
FIG. 10 is a schematic diagram showing a structural framework of a sound processing apparatus according to an embodiment of the present application.

In the drawings,
1: sound collection device; 2: echo processor; 3: microphone; 4: filter; 5: speaker;
6a: driver audio signal; 6b: speaker play sound; 6c: local noise; 6d: far-field sound; 6e: near-field audio reference signal; 6f: mixed audio signal; 6g: far-field audio signal;
10: silicon-based microphone device
20: housing; 21a: first housing aperture; 21b: second housing aperture; 22: sound isolation chamber; 23: empty space;
30: cover plate; 40: wall plate;
50: partition plate; 51 a: first partition plate aperture; 51b: second partition plate aperture;
52: partition plate sink;
60: transition plate; 61a: first transition plate aperture; 61b: second transition plate aperture;
70: connection ring;
100: circuit board; 110a: first sound inlet hole; 110b: second sound inlet hole;
200: shielding case; 210: shielding cavity;
300: differential silicon-based microphone chip; 300a: first differential silicon-based microphone chip; 300b: second differential silicon-based microphone chip;
301: first microphone structure; 301a: first microphone structure of first differential silicon-based microphone chip; 301b: first microphone structure of second differential silicon-based microphone chip;
302: second microphone structure; 302a: second microphone structure of first differential silicon-based microphone chip; 302b: second microphone structure of second differential silicon-based microphone chip;
303: back cavity; 303a: back cavity of first differential silicon-based microphone chip; 303b: back cavity of second differential silicon-based microphone chip;
310: upper back plate; 310a: first upper back plate; 310b: second upper back plate;
311: upper airflow hole;
312: upper back plate electrode; 312a: upper back plate electrode of first upper back plate; 312b: upper back plate electrode of second upper back plate;
313: upper air gap;
320: lower back plate; 320a: first lower back plate; 320b: second lower back plate;
321: lower airflow hole;
322: lower back plate electrode; 322a: lower back plate electrode of first lower back plate; 322b: lower back plate electrode of second lower back plate;
323: lower air gap;
330: semiconductor diaphragm; 330a: first semiconductor diaphragm; 330b: second semiconductor diaphragm;
331: semiconductor diaphragm electrode; 331a: semiconductor diaphragm electrode of first semiconductor diaphragm; 331b: semiconductor diaphragm electrode of second semiconductor diaphragm;
340: silicon substrate; 340a: first silicon substrate; 340b: second silicon substrate;
341: through hole;
350: first insulating layer; 360: second insulating layer; 370: third insulating layer;
380: wire; 400: control chip; and
500: sound processing apparatus; 510: audio signal obtaining module; and 520: audio signal processing module.

### DETAILED DESCRIPTION OF EMBODIMENTS

The present application is described in detail below, and embodiments of the present application are shown in the accompanying drawings, wherein the same or similar designations indicate the same or similar components or components having the same or similar functions throughout. In addition, where a detailed description of the known art is not necessary for the features of the present application shown, it is omitted. The embodiments described below by reference to the accompanying drawings are exemplary and are intended to explain the present application only and are not to be construed as limiting the present application.

It will be understood by those skilled in the art that all terms used herein, including technical terms and scientific terms, have the same meaning as generally understood by those skilled in the art to which the present application belongs, unless otherwise defined. It is also to be understood that terms such as those defined in the general dictionary are to be understood as having a meaning consistent with the meaning in the context of the prior art and are not to be interpreted in an idealized or overly formal sense unless specifically defined as herein.

It will be understood by those skilled in the art that, unless specifically stated, the singular forms "one", "a", "said", and "the" as used herein may also include the plural form. It should be further understood that the wording "include" as used in the specification of the present application refers to the presence of the described features, integers, steps, operations, elements and/or components, but does not exclude the presence or addition of one or more other features, integers, steps, operations, elements, components, and/or groups thereof. It should be understood that when an element is referred as being "connected" or "coupled" to another element, it may be directly connected or coupled to the another element, or there may be an intermediate element. In addition, "connect" or "couple" as used herein may include wirelessly connecting or wirelessly coupling. The word "and/or" as used herein includes all or any of the units and all combinations of one or more of the associated listed items.

In intelligent voice interaction, an intelligent terminal is generally equipped with both a pickup microphone and a speaker. A sound signal picked up by the pickup microphone is processed locally and transmitted to the cloud for speech recognition and semantic understanding, and the speaker plays music or interacts with a user according to a semantic requirement.

If not controlled at this point, the pickup microphone will pick up both the interacted voice signal and an echo signal. The echo signal here is a sound signal played by the speaker and transferred to the pickup microphone. When this sound signal is transferred to the cloud for recognition and semantic understanding, it will seriously affect the voice recognition and semantic understanding because it is mixed with the echo signal of the speaker.

The technical solution used by those skilled in the art includes the following steps: collecting sound (including a sound played by a speaker, a far-field voice, and a local noise), obtaining a mixed audio signal (including an echo signal of the speaker, a far-field voice signal, and a local noise signal) through an acousto-electric conversion, and reducing a proportion of an invalid audio signal (the echo signal and the local noise signal) in the mixed audio signal by using a software algorithm, so as to suppress the invalid audio signal and increase a proportion of the valid audio signal, i.e., to improve accuracy of voice recognition and semantic understanding performed in the cloud. However, an algorithm of this method is complicated, and computing pressure of an intelligent device is high and the accuracy is low.

Further, due to an non-linear effect of the operation of the speaker, such as an intercepted wave nonlinearity caused by lack of dynamic range, and an nonlinearity signal occurred in Dynamic Range Control (DRC) provided in an advanced speaker, a nonlinearity part different from an echo reference signal may be often occurred in the mixed audio signal. However, an adaptive filter provided in an echo processor is a linear filter, a nonlinearity part in the mixed audio signal may not be effectively counteracted, and a de-echoed signal output by the echo processor still has a larger echo, thus the accuracy of voice recognition and semantic understanding performed in the cloud is reduced.

An adaptive echo cancellation algorithm may be used to remove the echo signal. However, the nonlinearity signal generated through the speaker may cause a degradation of performance of the adaptive echo cancellation algorithm. To solve this problem, the following methods may be used:
Method one: a signal collection circuit may be designed in a speaker driver circuit to collect a current or voltage signal during operation of the speaker as the reference signal of the adaptive echo cancellation algorithm. However, only a signal feedback to the circuit system by nonlinear vibration of the speaker may be collected in this method, and a direct measurement of the non-linear vibration of the speaker may not be achieved.

Method two: an acceleration sensor is provided on the diaphragm of the speaker to collect an acceleration information during operation of the speaker as the reference signal of the adaptive echo cancellation algorithm. However, the additional acceleration sensor may affect the vibration of the diaphragm of the speaker in this method, which causes a new nonlinear factor.

Also, the audio signal of the local noise (such as noise resulting from vibration of device) may not be collected through either of the above two methods, and increasing of the proportion of the valid audio signal is stilled inhibited. This inhibition is especially obvious in smart speaker playing music, cell phone, TWS headphone, floor sweeper, air conditioner, hood and other smart home products with high vibration.

The present application provides a sound collection device, a sound processing apparatus and method, a device, and a storage medium, which may at least solve the above-mentioned technical problems of the prior art.

The technical solution of the present application and how the technical solution of the present application solves the above technical problems are described in detail below with specific embodiments.

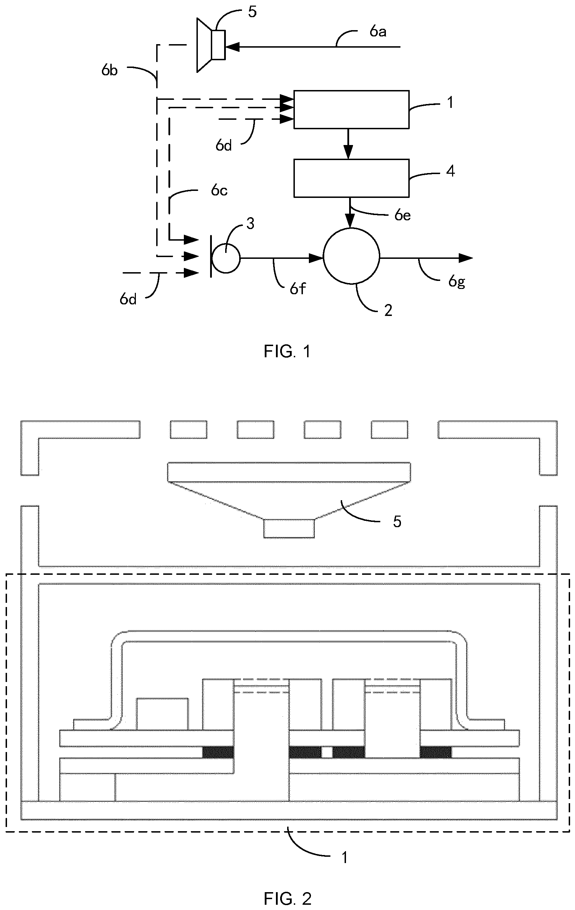

An embodiment of the present application provides a sound processing apparatus, a structure diagram of which is as shown in FIG. 1, including: a microphone 3, an echo processor 2, and a sound collection device 1. The sound collection device 1 is used to collect an ambient sound, and may output a near-field audio reference signal. The specific structure of the sound collection device 1 will be described in detail in the following, and will not be repeated here.

An output end of the microphone 3 is electrically connected to one input end of the echo processor 2, and an output end of the sound collection device 1 is electrically connected to the other input end of the echo processor 2. An output end of the echo processor 2 is used to output a far-field audio signal.

In the embodiment, the ambient sound may be collected by the microphone 3 and acoustically and electrically converted to the mixed audio signal and transferred to the echo processor 2. The sound collection device 1 may also collect the ambient sound, and may obtain the near-field audio reference signal directly by using its own structure. Alternately, the near-field audio reference signal may be obtained after signal processing by, for example, the echo processor 2 on the signal collected by the sound collection device 1. The echo processor 2 uses the near-field audio reference signal as a noise reference signal, the near-field audio signal in the mixed audio signal may be removed more easily and more accurately, the far-field audio signal may be obtained, and the accuracy of the far-field audio signal may be greatly improved.

Specifically, as shown in FIG. 1, the ambient sound may include a speaker play sound 6b, a local noise 6c, and a far-field sound 6d, where the speaker play sound 6b is obtained by a speaker 5 driven by a driver audio signal 6a. The sound collection device 1 performs an acousto-electric conversion on the collected ambient sound and transmits the resulting near-field audio reference signal 6e to the echo processor 2. At the same time, the microphone 3 also performs an acousto-electric conversion on the collected ambient sound and transmits the resulting mixed audio signal 6f to the echo processor 2. The echo processor 2 removes the near-field audio signal (including the audio signal corresponding to the speaker play sound 6b and the local noise 6c) from the mixed audio signal 6f according to the near-field audio reference signal 6e, and the far-field audio signal 6g with higher accuracy may be obtained.

In some possible implementations, as shown in FIG. 1, the sound processing apparatus may further include a filter 4. An input end of the filter 4 is electrically connected to an output end of the sound collection device 1, and an output end of the filter 4 is electrically connected to another input end of the echo processor 2.

In this embodiment, the filter 4 may filter out at least part of the noise signal in the audio signal obtained after the acousto-electric conversion by the sound collection device 1, which may effectively improve the accuracy of the near-field audio signal obtained directly by the sound collection device 1 using its own structure, or obtained through signal processing by, for example, the echo processor 2.

According to an embodiment of the present application, the filter 4 is an adaptive filter. The adaptive filter may change a parameter or circuit structure thereof by using an adaptive algorithm, based on change of environment. In general, the circuit structure of the adaptive filter is not changed. In contrast, a coefficient of the adaptive filter is a time-varying coefficient updated by an adaptive algorithm, i.e., the coefficient may automatically and continuously adapt to a given signal so as to a desired response may be obtained. The most important feature of the adaptive filter lies in its ability to work efficiently in an unknown environment and to track time-varying feature of an input signal.

In some possible implementations, as shown in FIG. 1, the sound processing apparatus may further include a speaker 5. The speaker 5 is electrically connected to an output end of the echo processor 2.

In this embodiment, the speaker 5 may perform an acousto-electric conversion on the far-field audio signal output by the echo processor 2 so as to play it in high definition.

According to an embodiment of the present application, at least one of the speaker 5 and the microphone 3 may be integrated with the sound collection device 1 to be provided within a housing of the sound processing apparatus, as shown in FIG. 2. As for an accommodating space for the speaker 5, an accommodating space for the microphone 3, and an accommodating space for the sound collection device 1, every two of the accommodating spaces may be separated by an acoustic panel. Specifically, the sound processing apparatus may be, for example, an amplifiers, a smart speaker, etc.

Specifically, the sound processing apparatus according to the above embodiments may be a cell phone, True Wireless Stereo (TWS) headphones, a floor sweeper, a smart air conditioner, a smart hood, and other smart home products with internal noise with higher level.

The following is a detailed description of the sound collection device 1 according to the above embodiments.

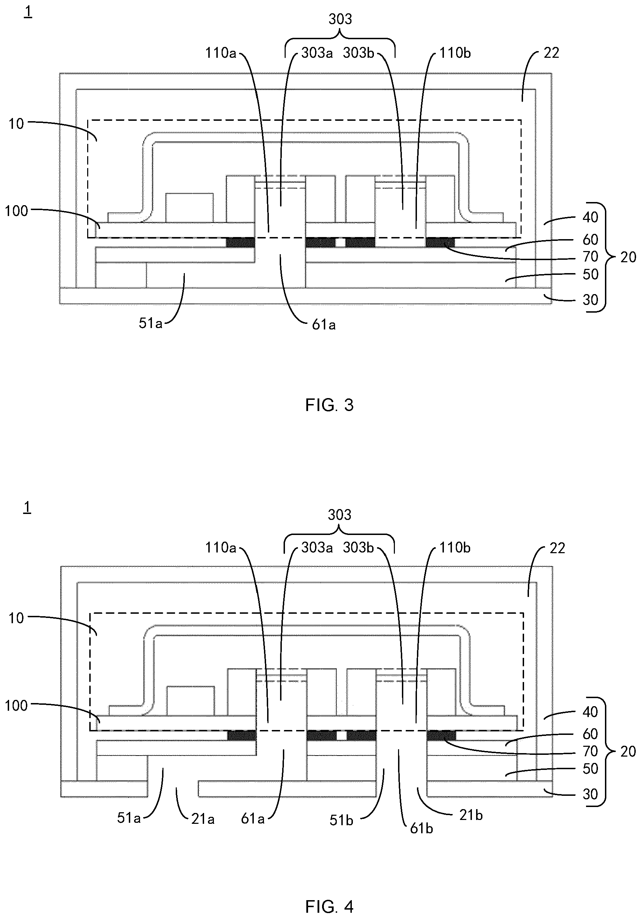

An embodiment of the present application provides a sound collection device 1, which has a schematic structure as shown in FIGS. 3-5, and includes: a housing 20 and a silicon-based microphone device 10 located within the housing 20.

The silicon-based microphone device 10 includes a circuit board 100 and an even number of silicon-based microphone chips provided on one side of the circuit board 100. The circuit board 100 is provided with an even number of sound inlet holes, and the even number of sound inlet holes are communicated with to back cavities 303 of the even number of silicon-based microphone chips in one-to-one correspondence.

The housing 20 is provided with a sound channel in communication with a corresponding one of the sound inlet holes in one-to-one correspondence.

The correspondingly communicated back cavity 303 and sound inlet hole may form an acoustic cavity, or, the correspondingly communicated back cavity 303, sound inlet hole and sound channel may form an acoustic cavity.

At least two acoustic cavities have different volumes and/or shapes.

In this embodiment, the sound collection device 1 uses the even number of silicon-based microphone chips to collect ambient sound. Among the acoustic cavities used to conduct the ambient sound to the corresponding silicon-based microphone chips, at least two of the acoustic cavities have different volumes and/or shapes.

Specifically, as shown in FIG. 3, the back cavity 303a, the first sound inlet hole 110a, the first transition plate aperture 61a, and the first partition plate aperture 51a form one acoustic cavity, and the back cavity 303b and the second sound inlet hole 110b form another acoustic cavity. Apparently, the two acoustic cavities have different volumes and/or shapes.

As shown in FIG. 4, the back cavity 303a, the first sound inlet hole 110a, the first transition plate aperture 61a, the first partition plate aperture 51a and the first housing aperture 21a form one acoustic cavity, and the back cavity 303b, the second sound inlet hole 110b, the second transition plate aperture 61b, the second partition plate aperture 51b and the second housing aperture 21b form another acoustic cavity. Due to aperture diameter of the first partition plate aperture 51a being larger than that of the second partition plate aperture 51b, the two acoustic cavities have different volumes and/or shapes.

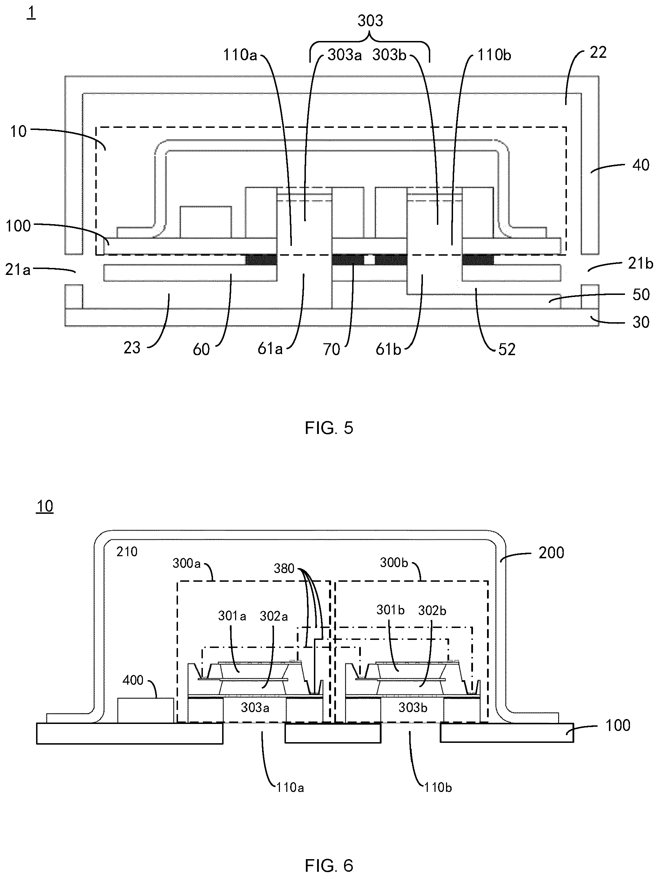

As shown in FIG. 5, the back cavity 303a, the first sound inlet hole 110a, the first transition plate aperture 61a, an empty space 23 and the first housing aperture 21a form one acoustic cavity, and the back cavity 303b, the second sound inlet hole 110b, the second transition plate aperture 61b, the partition plate sink 52 and the second housing aperture 21b form another acoustic cavity. Due to the empty space 23 and the partition plate sink 52 having different volumes and/or shapes, the two acoustic cavities have different volumes and/or shapes.

The difference in volume and/or shape of the two acoustic cavities may contribute to generation of a path difference in the aforementioned at least two acoustic cavities for the near-field sound in the ambient sound. That is, the near-field sound acts on the corresponding two silicon-based microphone chips with a different amplitude or phase, and thus the near-field sound on the corresponding two silicon-based microphone chips may not be counteracted each other. However, the far-field sound in the ambient sound does not generate a significant path difference in the aforementioned at least two acoustic cavities. That is, the far-field sound acts on the corresponding two silicon-based microphone chips with a same amplitude or phase, and thus the far-field sound on the corresponding two silicon-based microphone chips may be counteracted each other. Therefore, the sound collection device 1 provided in the embodiment of the present application may more easily output only the near-field audio reference signal according to the collected ambient sound, or more easily output only the near-field audio reference signal with the cooperation of other signal processing apparatus.

Considering that the housing 20 is provided with the sound channel in communication with a corresponding one of the sound inlet holes in one-to-one correspondence, and that the at least two acoustic cavities have different volumes and/or shapes, the present application provides a possible implementation for the housing 20 of the sound collection device 1 as follows.

As shown in FIGS. 3 and 4, the housing 20 according to an embodiment of the present application includes a cover plate 30, a wall plate 40, and a partition plate 50.

The cover plate 30 is coupled to the wall plate 40 to form a sound isolation chamber 22.

The partition plate 50 is connected between the circuit board 100 and an inner wall of the cover plate 30. Or, the partition plate 50 is connected between the circuit board 100 and an inner wall of the wall plate 40.

The partition plate 50 is provided with at least one partition plate aperture constituting the sound channel. The partition plate aperture is communicated with at least one of the sound inlet holes.

In the embodiment, the cover plate 30 is coupled to the wall plate 40 of the housing 20 to form the sound isolation chamber 22 that may be used to accommodate the silicon-based microphone device 10.

The partition plate 50 of the housing 20 may provide a mounting position for the silicon-based microphone device 10. The partition plate aperture provided on the partition plate 50 may constitute the sound channel of the housing 20 that is communicated with the sound inlet hole in one-to-one correspondence. That is, the partition plate aperture may form at least part of the sound channel. Moreover, the partition plate aperture is communicated with at least one of the sound inlet holes, so as to contribute to generation of distinction, i.e., difference in volume and/or shape for at least two acoustic cavities.

Specifically, among two acoustic cavities, one acoustic cavity includes a back cavity 303 and a sound inlet hole correspondingly communicated, and the other acoustic cavity includes a back cavity 303, a sound inlet hole and a sound channel (which includes at least a partition plate aperture) correspondingly communicated. In this way, distinction in volume and/or shape for the two acoustic cavities may be generated.

On the basis of the above solution, in some possible embodiments, the housing 20 may further includes a transition plate 60.

The transition plate 60 is connected between the circuit board 100 and the partition plate 50.

The transition plate 60 is provided with at least one transition plate aperture constituting the sound channel. The transition plate aperture is communicated with at least one of the sound inlet holes and the at least one partition plate aperture.

In this embodiment, the transition plate 60 of the housing 20 may be a connecting structure between the silicon-based microphone device 10 and the partition plate 50. The transition plate aperture provided on the transition plate 60 may constitute the sound channel of the housing 20 that is communicated with the sound inlet hole in one-to-one correspondence. That is, the transition plate aperture may form at least part of the sound channel. Moreover, the transition plate aperture is communicated with at least one of the sound inlet holes, so as to contribute to generation of distinction, i.e., difference in volume and/or shape for at least two acoustic cavities.

Specifically, among two acoustic cavities, one acoustic cavity includes a back cavity 303 and a sound inlet hole correspondingly communicated, or includes a back cavity 303, a sound inlet hole, and a sound channel (which includes a partition plate aperture) correspondingly communicated; and the other acoustic cavity includes a back cavity 303, a sound inlet hole, and a sound channel (which includes at least a transition plate aperture and a partition plate aperture) correspondingly communicated. In this way, distinction in volume and/or shape for the two acoustic cavities may be generated.

On the basis of the above solution, in some possible embodiments, the cover plate 30 or the wall plate 40 is provided with at least one housing aperture. The housing aperture is communicated with the at least one partition plate aperture.

In this embodiment, the cover plate 30 or the wall plate 40 of the housing 20 is provided with a housing aperture, which may be communicated with the partition plate aperture. That is, the housing aperture may also form a part of the sound channel. On one hand, the housing aperture may contribute to generation of distinction, i.e., difference in volume and/or shape for at least two acoustic cavities. On the other hand, the housing aperture may contribute to the ambient sound entering the acoustic cavities directly through air propagation and eventually acting on the silicon-based microphone chips.

Specifically, among two acoustic cavities, one acoustic cavity includes a back cavity 303 and a sound inlet hole correspondingly communicated, or includes a back cavity 303, a sound inlet hole and a sound channel (which includes a partition plate aperture) correspondingly communicated, or includes a back cavity 303, a sound inlet hole and a sound channel (which includes a transition plate aperture and a partition plate aperture) correspondingly communicated; the other acoustic cavity includes a back cavity 303, a sound inlet hole and a sound channel (which includes at least a transition plate aperture, a partition plate aperture and a housing aperture) correspondingly communicated. In this way, distinction in volume and/or shape for the two acoustic cavities may be generated.

On the basis of the above solution, in some possible embodiments, the transition plate aperture is provided in an even number of transition plate apertures, communicated with the even number of sound inlet holes in one-to-one correspondence.

In this embodiment, the even number of sound inlet holes provided on the circuit board 100 of the silicon-based microphone device 10 may be more easily paired with the even number of transition plate apertures. The even number of transition plate apertures allows a bigger space for each of two sound channels communicated with each of two sound inlet holes in one-to-one correspondence. In this way, there may be more choice when generating distinction in volume and/or shape for the two acoustic cavities. For example, size or shape of the corresponding two transition plate apertures are changed to be different.

On the basis of the above solution, in some possible embodiments, the partition plate aperture is provided in an even number of partition plate apertures, communicated with the even number of transition plate apertures in one-to-one correspondence.

In this embodiment, the even number of sound inlet holes provided on the circuit board 100 of the silicon-based microphone device 10 may be more easily paired with the even number of partition plate apertures through the even number of transition plate apertures. The even number of partition plate apertures allows a bigger space for each of two sound channels communicated with each of two sound inlet holes in one-to-one correspondence. In this way, there may be more choice when generating distinction in volume and/or shape for the two acoustic cavities. For example, size or shape of the corresponding two partition plate apertures are changed to be different.

On the basis of the above solution, in some possible embodiments, the housing aperture is provided in an even number of housing apertures, communicated with the even number of partition plate apertures in one-to-one correspondence.

In this embodiment, the even number of sound inlet holes provided on the circuit board 100 of the silicon-based microphone device 10 may be more easily paired with the even number of housing apertures through the even number of transition plate apertures and the even number of partition plate apertures. The even number of housing apertures allows a bigger space for each of two sound channels communicated with each of two sound inlet holes in one-to-one correspondence. In this way, there may be more choice when generating distinction in volume and/or shape for the two acoustic cavities. For example, size or shape of the corresponding two housing apertures are changed to be different.

On the basis of the above solutions, in some possible embodiments, the housing 20 may further include a connection ring 70. On one hand, the connection ring 70 may provide a connection between any two adjacent structures among the circuit board 100 of the silicon-based microphone device 10, the transition plate 60, partition plate 50, the cover plate 30 or the wall plate 40 of the housing 20. On the other hand, the connection ring 70 may improve air-tightness of the sound channel constructed together by the aperture of each of the structures, and improve fidelity or accuracy of the sound waves reaching the silicon-based microphone chip of the silicon-based microphone device 10 through the acoustic cavity. It may be understood that the aperture in the middle of the connection ring 70 may also form a part of the sound channel.

Specifically, the connection ring 70 has at least one of the following arrangements.

The connection ring 70 is connected between the sound inlet hole of the circuit board 100 and the transition plate aperture of the transition plate 60, so that an airtight sound channel may be formed between the sound inlet hole and the transition plate aperture.

The connection ring 70 is connected between the sound inlet hole of the circuit board 100 and the transition plate 60, so that an airtight sound channel may be formed between the sound inlet hole and the transition plate 60.

The connection ring 70 is connected between the transition plate aperture of the transition plate 60 and the partition plate aperture of the partition plate 50, so that an airtight sound channel may be formed between the transition plate aperture and the partition plate aperture.

The connection ring 70 is connected between the transition plate aperture of the transition plate 60 and the partition plate 50, so that an airtight sound channel may be formed between the transition plate aperture and the partition plate 50.

The connection ring 70 is connected between the partition plate aperture of the partition plate 50 and the housing aperture, so that an airtight sound channel may be formed between the partition plate aperture and the housing aperture.

The connection ring 70 is connected between the partition plate aperture of the partition plate 50 and the cover plate 30, so that an airtight sound channel may be formed between the partition plate aperture and the cover plate 30. Or, the connection ring 70 is connected between the partition plate aperture of the partition plate 50 and the wall plate 40, so that an airtight sound channel may be formed between the partition plate aperture and the wall plate 40.

Considering that the housing 20 is provided with the sound channel in communication with a corresponding one of the sound inlet holes in one-to-one correspondence, the present application provides another possible implementation for the housing 20 of the sound collection device 1 as follows.

As shown in FIG. 5, the housing 20 according to an embodiment of the present application may include a cover plate 30, a wall plate 40 and a partition plate 50.

The cover plate 30 is coupled to the wall plate 40 to form a sound insulation chamber 22.

The partition plate 50 is connected between an inner wall of the cover plate 30 and a part of the circuit board 100. Or, the partition plate 50 is connected between an inner wall of the wall plate 40 and a part of the circuit board 100.

The partition plate 50 is provided with at least one partition plate sink 52 constituting to the sound channel.

One end of the partition plate sink 52 is communicated with at least one of the sound inlet holes. The other end of the partition plate sink 52 is communicated with the sound isolation chamber 22.

In this embodiment, the cover plate 30 is coupled to the wall plate 40 of the housing 20 to form the sound isolation chamber 22 that may be used to accommodate the silicon-based microphone device 10.

The partition plate 50 of the housing 20 may provide a mounting position for the silicon-based microphone device 10. The partition plate sink 52 provided in the partition plate 50 may constitute the sound channel of the housing 20 that is communicated with the sound inlet hole in one-to-one correspondence. The other end of the partition plate sink 52 is communicated with the sound isolation cavity 22. That is, both of the partition plate sink 52 and the sound isolation cavity 22 may form at least part of the sound channel. Moreover, the partition plate sink 52 is communicated with at least one of the sound inlet holes, so as to contribute to generation of distinction, i.e., difference in volume and/or shape for at least two acoustic cavities.

In addition, the partition plate 50 is connected between the inner wall of the cover plate 30 and the part of the circuit board 100. Or, the partition plate 50 is connected between the inner wall of the wall plate 40 and the part of the circuit board 100. That is, the remaining part of the circuit board 100 is not connected to the partition plate 50. An empty space 23 may be formed between the remaining part of the circuit board 100 and the inner wall of the cover 30 or the inner wall of the wall plate 40. The sound inlet hole provided on the remaining part of the circuit board 100 may be communicated with the empty space 23, and the empty space 23 may be easily communicated with the sound isolation cavity 22. In other words, this empty space 23 and the sound isolation cavity 22 may constitute at least part of another sound channel, so as to contribute to generation of distinction, i.e., difference in volume and/or shape for at least two acoustic cavities.

Specifically, among two acoustic cavities, one acoustic cavity includes a back cavity 303, a sound inlet hole and a sound channel (which includes at least a partition plate sink 52 and a sound isolation cavity 22) correspondingly communicated, and the other acoustic cavity includes a back cavity 303, a sound inlet hole and a sound channel (which includes at least an empty space 23 and a sound isolation cavity 22) correspondingly communicated. In this way, distinction in volume and/or shape for the two acoustic cavities may be generated.

On the basis of the above solution, in some possible embodiments, the cover plate 30 or the wall plate 40 is provided with at least one housing aperture. The housing aperture is communicated with the sound isolation cavity 22.

In this embodiment, the cover plate 30 or the wall plate 40 of the housing 20 is provided with the housing aperture and this housing aperture may be communicated with the sound isolation cavity 22. That is, the housing aperture may also constitute a part of the sound channel. On one hand, by selecting the provided position of the housing aperture (i.e., so that the distance from the housing aperture to the other end of the partition plate sink 52 is different from the distance from the housing aperture to the empty space 23), it may contribute to generation of distinction, i.e., difference in volume and/or shape for at least two acoustic cavities. On the other hand, it may contribute to the ambient sound entering the acoustic cavities directly through air propagation and eventually acting on the silicon-based microphone chips.

Considering that the back cavity 303 and the sound inlet hole correspondingly communicated in the housing 20 may form the acoustic cavity, or that the back cavity 303, the sound inlet hole and the sound channel correspondingly communicated may form the acoustic cavity, and that at least two acoustic cavities have different volumes and/or shapes, the present application provides a possible implementation for the housing 20 of the sound collection device 1 as follows.

At least two of aperture diameter of the sound inlet hole, aperture diameter of the transition plate aperture, aperture diameter of the partition plate aperture and aperture diameter of the housing aperture according to the present application embodiment have different sizes.

In this embodiment, difference in volume and/or shape of at least two acoustic cavities are easily generated by changing sizes of aperture diameter of apertures constituting the sound channel.

Considering that the sound collection device 1 collects the ambient sound, if the sound collection device 1 may obtain a near-field audio reference signal directly by using its own structure, workload of subsequent signal processing apparatus such as the echo processor 2 may be reduced. Therefore, the present application provides a possible implementation for the silicon-based microphone device 10 in the sound collection device 1 as follows.

The silicon-based microphone chip according to an embodiment of the present application is a differential silicon-based microphone chip 300.

Among every two differential silicon-based microphone chips 300, a first microphone structure of one differential silicon-based microphone chip 300 may be electrically connected to a second microphone structure of the other differential silicon-based microphone chip 300, and a second microphone structure of the one differential silicon-based microphone chip 300 may be electrically connected to a first microphone structure of the other differential silicon-based microphone chip 300.

In this embodiment, an even number of differential silicon-based microphone chips 300 are used for acousto-electric conversion. For convenience of explanation, the silicon-based microphone device in FIG. 6 is only exemplified as two differential silicon-based microphone chips 300.

Under action of homologous sound waves, a first microphone structure 301 and a second microphone structure 302 of each differential silicon-based microphone chip 300 may respectively generate electrical signals with the same variation amplitude and opposite sign. Therefore, in an embodiment of the present application, a first microphone structure 301a of a first differential silicon-based microphone chip is electrically connected to a second microphone structure 302b of a second differential silicon-based microphone chip 300b, and a second microphone structure 302a of the first differential silicon-based microphone chip 300a is electrically connected to a first microphone structure 301b of the second differential silicon-based microphone chip. Thus, a first sound wave electrical signal generated by the first differential silicon-based microphone chip 300a may be superimposed with the second sound wave electrical signal generated by the second differential silicon-based microphone chip 300b. In this way, the homologous sound wave signals with the same variation amplitude and the opposite sign in the first sound wave electrical signal and the second sound wave electrical signal may be partially weakened or counteracted.

Based on the above-mentioned signal superposition principle of the differential silicon-based microphone chips, in an embodiment of the present application, among every two differential silicon-based microphone chips 300, one differential silicon-based microphone chip 300 collects ambient sound waves through a corresponding acoustic cavity (which includes a back cavity 303 of the one differential silicon-based microphone chip 300 itself, a corresponding sound inlet hole on the circuit board 100, and a corresponding sound channel in the housing 20), and the other differential silicon-based microphone chip 300 collects ambient sound waves through another corresponding acoustic cavity (which includes a back cavity 303 of the other differential silicon-based microphone chip 300 itself, another corresponding sound inlet hole on the circuit board 100, and another corresponding sound channel in the housing 20).

Due to the different volumes and/or shapes of the two acoustic cavities, it may contribute to generation of a path difference in the aforementioned two sound cavities for the near-field sound in the ambient sound. That is, the near-field sound acts on the corresponding two silicon-based microphone chips with a different amplitude or phase. At this time, the near-field audio signals generated by the two silicon-based microphone chips will be mutually attenuated after being superimposed, but will not be completely counteracted. Meanwhile, the far-field sound in the ambient sound does not generate a significant path difference in the aforementioned at least two sound cavities. That is, it may deem that the far-field sound acts on the corresponding two silicon-based microphone chips with a same amplitude or phase. At this time, the far-field audio signals generated by the two silicon-based microphone chips will be completely counteracted each other after being superposed.

Therefore, the silicon-based microphone device according to embodiments of the present application may employ an even number of differential silicon-based microphone chips, and may output only the near-field audio reference signal directly through its own structure according to the collected ambient sound.

According to an embodiment of the present application, the differential silicon-based microphone chip 300 is fixedly connected to the circuit board 100 via, for example, silicone.

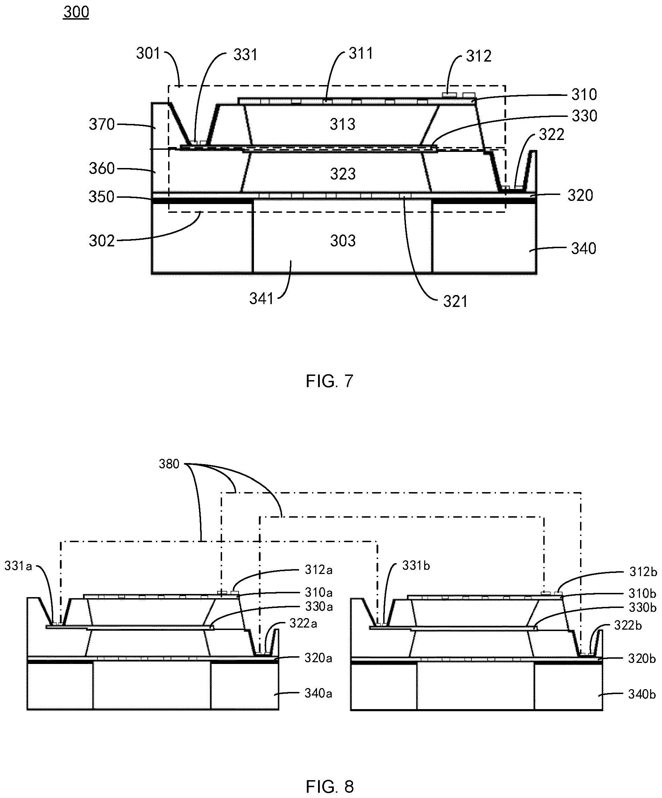

In some possible embodiments, as shown in FIG. 7, the differential silicon-based microphone chip 300 may further include an upper back plate 310, a semiconductor diaphragm 330, and a lower back plate 320 that are stacked and disposed spaced apart from each other. Specifically, a gap, such as an air gap, is disposed between the upper back plate 310 and the semiconductor diaphragm 330 and between the semiconductor diaphragm 330 and the lower back plate 320.

The upper back plate 310 and the semiconductor diaphragm 330 constitute the body of the first microphone structure 301. The semiconductor diaphragm 330 and the lower back plate 320 constitute the body of the second microphone structure 302.

Portions of the upper back plate 310 and the lower back plate 320 corresponding to the sound inlet holes are provided with a number of airflow holes.

For the sake of description, one back plate in the differential silicon-based microphone chip 300 away from the circuit board 100 is defined as the upper back plate 310, and one back plate in the differential silicon-based microphone chip 300 close to the circuit board 100 is defined as the lower back plate 320 herein.

In this embodiment, the semiconductor diaphragm 330 is shared by the first microphone structure 301 and the second microphone structure 302. The semiconductor diaphragm 330 may be a thinner and more flexible structure that may be bent and deformed under the action of sound waves. Both the upper back plate 310 and the lower back plate 320 may be a much thicker and more rigid structure than the semiconductor diaphragm 330, which is less prone to deformation.

Specifically, the semiconductor diaphragm 330 and the upper back plate 310 may be arranged in parallel and separated by an upper air gap 313, thereby forming the body of the first microphone structure 301. The semiconductor diaphragm 330 and the lower back plate 320 may be arranged in parallel and separated by a lower air gap 323, thereby forming the body of the second microphone structure 302. It may be understood that an electric field (which is non-conductive) may be formed between the semiconductor diaphragm 330 and the upper back plate 310 and between the semiconductor diaphragm 330 and the lower back plate 320. Sound waves entering from the sound inlet hole may contact the semiconductor diaphragm 330 through the back cavity 303, a lower airflow hole 321 in the lower back plate 320.

When the sound waves enter the back cavity 303 of the differential silicon-based microphone chip 300, the semiconductor diaphragm 330 may be deformed under the action of the sound waves. The changes of the gaps between the semiconductor diaphragm 330 and the upper back plate 310 and the lower back plate 320 caused by the deformation may bring about the change of the capacitance between the semiconductor diaphragm 330 and the upper back plate 310, and the change of the capacitance between the semiconductor diaphragm 330 and the lower back plate 320, that is, the conversion of sound waves into electrical signals is realized.

For a single differential silicon-based microphone chip 300, an upper electric field may be formed in the gap between the semiconductor diaphragm 330 and the upper back plate 310 by applying a bias voltage between the semiconductor diaphragm 330 and the upper back plate 310. Similarly, a lower electric field may be formed in the gap between the semiconductor diaphragm 330 and the lower back plate 320 by applying a bias voltage between the semiconductor diaphragm 330 and the lower back plate 320. Due to the polarities of the upper and lower electric fields being exactly opposite, when the semiconductor diaphragm 330 is bent upward and downward under the action of sound waves, the amount of capacitance change of the first microphone structure 301 has the same magnitude and opposite sign as that of the second microphone structure 302.

According to an embodiment of the present application, the semiconductor diaphragm 330 may be made of polycrystalline silicon material. The thickness of the semiconductor diaphragm 330 is not more than 1 µm, which may be deformed even when is under a small action of sound waves and thus has a high sensitivity. Each of the upper back plate 310 and the lower back plate 320 may be made of a rigid material having a thickness of several microns. There are a plurality of upper airflow holes 311 etched on the upper back plate 310 and a plurality of lower airflow holes 321 etched on the lower back plate 320. Therefore, when the semiconductor diaphragm 330 is deformed by the sound waves, both of the upper and lower back plates 310 and 320 may not be affected by the deformation.

According to an embodiment of the present application, the gap between the semiconductor diaphragm 330 and the upper back plate 310 or the lower back plate 320 has a thickness of a few microns, i.e., in a micron level, respectively.

In some possible implementations, as shown in FIG. 8, every two differential silicon-based microphone chips 300 may include a first differential silicon-based microphone chip 300a and a second differential silicon-based microphone chip 300b.

The first upper back plate 310a of the first differential silicon-based microphone chip 300a may be electrically connected to the second lower back plate 320b of the second differential silicon-based microphone chip 300b for forming a first path signal.

The first lower back plate 320a of the first differential silicon based microphone chip 300a may be electrically connected to the second upper back plate 310b of the second differential silicon based microphone chip 300b for forming a second path signal.

As previously detailed description, in a single differential silicon-based microphone chip 300, the amount of capacitance change of the first microphone structure 301 has the same magnitude and opposite sign as that of the second microphone structure 302. In the same way, in every two differential silicon microphone chips 300, the capacitance changes at the upper back plate 310 of one differential silicon microphone chip 300 and the lower back plate 320 of the other differential silicon microphone chip 300 are the same in magnitude and opposite in sign.

Thus, in this embodiment, a first upper sound wave electrical signal generated at the first upper back plate 310a of the first differential silicon-based microphone chip 300a is superimposed with a second lower sound wave electrical signal generated at the second lower back plate 320b of the second differential silicon-based microphone chip 300b to obtain a first path signal. Homologous audio signals in the first upper sound wave electrical signal and the second lower sound wave electrical signal may be attenuated or counteracted each other.

Similarly, a first lower sound wave electrical signal generated at the first lower back plate 320a of the first differential silicon-based microphone chip 300a is superimposed with a second upper sound wave electrical signal generated at the second upper back plate 310b of the second differential silicon-based microphone chip 300b to obtain a second path signal. Homologous audio signals in the first lower sound wave electrical signal and the second lower sound wave electrical signal may be attenuated or counteracted each other.

Specifically, the upper back plate electrode 312a of the first upper back plate 310a may be electrically connected to the lower back plate electrode 322b of the second lower back plate 320b via a wire 380, for forming the first path signal. The lower back plate electrode 322a of the first lower back plate 320a may be electrically connected to the upper back plate electrode 312b of the second upper back plate 310b via the wire 380, for forming the second path signal.

In some possible implementations, as shown in FIG. 8, the first semiconductor diaphragm 330a of the first differential silicon-based microphone chip 300a is electrically connected to the second semiconductor diaphragm 330b of the second differential silicon-based microphone chip 300b. At least one of the first semiconductor diaphragm 330a and the second semiconductor diaphragm 330b is used to electrically connect to a constant voltage source.

In this embodiment, the first semiconductor diaphragm 330a of the first differential silicon-based microphone chip 300a is electrically connected to the second semiconductor diaphragm 330b of the second differential silicon-based microphone chip 300b, thereby allowing that the semiconductor diaphragms 330 of the two differential silicon-based microphone chips 300 may have the same potential. That is, a reference for generating electrical signals by the two differential silicon-based microphone chips 300 may be unified.

Specifically, the semiconductor diaphragm electrode 331a of the first semiconductor diaphragm, and the semiconductor diaphragm electrode 331b of the second semiconductor diaphragm may be electrically connected via the wire 380.

According to an embodiment of the present application, the semiconductor diaphragms 330 of all differential silicon-based microphone chips 300 may be electrically connected, so that the references for generating the electrical signals by differential silicon-based microphone chips 300 are the same.

In some possible implementations, as shown in FIG. 6, the silicon-based microphone device may further include a control chip 400. The control chip 400 is located within the shielding cavity 210 and is electrically connected to the circuit board 100.

One of the first upper back plate 310a and the second lower back plate 320b may be electrically connected to one of the signal input terminals of the control chip 400. One of the first lower back plate 320a and the second upper back plate 310b may be electrically connected to another one of the signal input terminals of the control chip 400.

In this embodiment, the control chip 400 is used to receive signals in two paths that have been physically de-noised from each of the aforementioned differential silicon-based microphone chips 300. And the signals in the two paths may be secondary de-noised and then output to the next level device or component.

According to an embodiment of the present application, the control chip 400 is fixedly connected to the circuit board 100 by, for example, silicone or red glue.

According to an embodiment of the present application, the control chip 400 includes an Application Specific Integrated Circuit (ASIC) chip. The ASIC chip may apply a differential amplifier with two input terminals. For different application scenarios, output signal of the ASIC chip may be single-ended or differential outputs.

In some possible implementations, as shown in FIG. 7, the differential silicon-based microphone chip 300 includes a silicon substrate 340.

The first microphone structure 301 and the second microphone structure 302 are laminated and provided on one side of the silicon substrate 340.

The silicon substrate 340 has a through-hole 341 thereon for forming the back cavity 303. The through-hole 341 corresponds to both of the first microphone structure 301 and the second microphone structure 302. The silicon substrate 340 is fixedly connected to the circuit board 100 on a side away from the first microphone structure 301 and the second microphone structure 302. The through-hole 341 is communicated to the sound inlet hole.

In this embodiment, the silicon substrate 340 provides support for the first microphone structure 301 and the second microphone structure 302. The silicon substrate 340 has a through-hole 341 for forming the back cavity 303, which may facilitate the entry of sound waves into the differential silicon-based microphone chip 300 and the sound waves may act on the first microphone structure 301 and the second microphone structure 302, respectively, causing the first microphone structure 301 and the second microphone structure 302 to generate differential electrical signals.

In some possible implementations, as shown in FIG. 7, the differential silicon-based microphone chip 300 may further include a first insulating layer 350, a second insulating layer 360, and a third insulating layer 370 which are patterned.

The silicon substrate 340, the first insulating layer 350, the lower back plate 320, the second insulating layer 360, the semiconductor diaphragm 330, the third insulating layer 370, and the upper back plate 310, are provided to be stacked sequentially.

In this embodiment, the lower back plate 320 is separated from the silicon substrate 340 by the patterned first insulating layer 350, the semiconductor diaphragm 330 is separated from the lower back plate 320 by the patterned second insulating layer 360, and the upper back plate 310 is separated from the semiconductor diaphragm 330 by the patterned third insulating layer 370, thus forming an electrical isolation between the conductive layers, so as to avoid a short circuit between the conductive layers and signal accuracy degradation.

According to an embodiment of the present application, each of the first insulating layer 350, the second insulating layer 360, and the third insulating layer 370 may be patterned by an etching process, after full film formation, to remove portions of the insulating layer corresponding to the area of the through hole 341 and portions of the insulating layer in the area used to prepare the electrodes.

On the basis of the above solution, in some possible embodiments, the silicon-based microphone device may further include a shielding case 200. The shielding case 200 covers one side of the circuit board 100 and forms a shielding cavity 210 with the circuit board 100. An even number of differential silicon-based microphone chips are located within the shielding cavity 210.

The shielding case 200 is coupled to the circuit board 100 to form a relatively closed shielding cavity 210. In order to play a role of shielding electromagnetic interference for devices such as the differential silicon microphone chips 300 within the shielding cavity 210, for example, the shielding case 200 includes a metal housing electrically connected to the circuit board 100.

According to an embodiment of the present application, the shielding case 200 is fixedly connected to one side of the board 100 by, for example, solder paste or conductive adhesive.

According to an embodiment of the present application, the circuit board 100 includes a Printed Circuit Board (PCB) 100 board.

It should be noted that the silicon-based microphone device in the above embodiments of the present application may employ a differential structure having a single diaphragm (e.g., a semiconductor diaphragm), and a dual back plate (e.g., an upper back plate and a lower back plate), or employ a differential structure having a dual diaphragm and a single back plate, or some other differential structure.

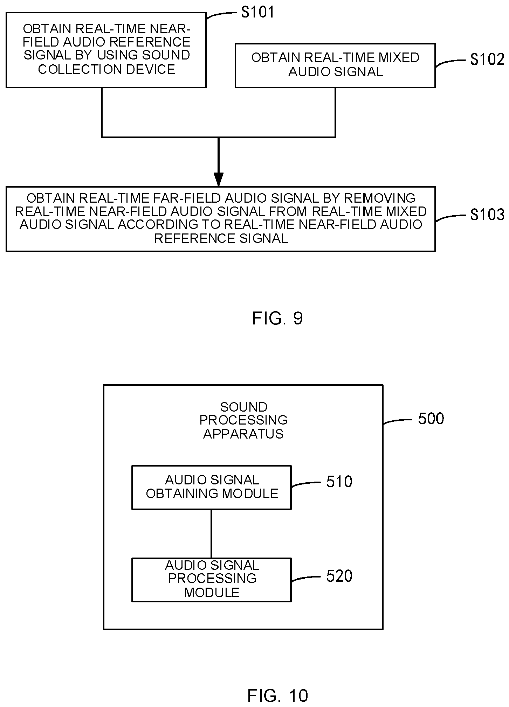

Based on the same inventive concept, a sound processing method according to an embodiment of the present application of which a schematic flow diagram is shown in FIG. 9, includes steps S101-S103.

S101: A real-time near-field audio reference signal is obtained by using any of the sound collection device 1 according to the above embodiments.

In this step, the sound collection device 1 may collect the ambient sound and perform an acousto-electric conversion on the ambient sound. Thereafter, the real-time near-field audio reference signal may be obtained directly by using the own structure of the sound collection device 1. Alternatively, the real-time near-field audio reference signal may be obtained by performing signal processing on the acousto-electric conversed audio signal from the sound collection device 1, for example, by the echo processor 2.

S102: A real-time mixed audio signal is obtained.

In this step, the ambient sound may be collected by a conventional microphone and converted into a mixed audio signal through the acousto-electric conversion.

S103: A real-time far-field audio signal is obtained by removing the real-time near-field audio signal from the real-time mixed audio signal according to the real-time near-field audio reference signal.

In this step, the echo processor 2 may use the real-time near-field audio reference signal obtained in step S101 as a noise reference signal, which may more easily and accurately remove the real-time near-field audio signal from the mixed audio signal to obtain the far-field audio signal, greatly improving the accuracy of the far-field audio signal.

Based on the same inventive concept, a sound processing apparatus 500 according to an embodiment of the present application which has a structural framework schematically shown in FIG. 10, includes an audio signal obtaining module 510 and an audio signal processing module 520.

The audio signal obtaining module 510 is configured to collect a real-time near-field audio reference signal and a real-time mixed audio signal.

The audio signal processing module 520 is configured to remove a real-time near-field audio signal from the real-time mixed audio signal according to the real-time near-field audio reference signal to obtain a real-time far-field audio signal.

The sound processing apparatus of the embodiment may perform any of the sound processing methods according to the embodiments of the present application, and the principles of their implementation are similar and will not be repeated here.

Based on the same inventive concept, an embodiment of the present application provides a computer-readable storage medium. The computer-readable storage medium has a computer program stored thereon. When the computer program is executed by an electronic device, the sound processing methods according to the above embodiments may be realized.

Compared with the prior arts, when the computer program stored in the computer-readable storage medium according to the embodiment of the present application is executed by the electronic device, the near-field audio signal in the mixed audio signal is more easily and more accurately to be removed, so as to obtain the far-field audio signal, thus the accuracy of the far-field audio signal is greatly improved.

It will be understood by those skilled in the art that the computer-readable storage media according to this embodiment may be any usable media that may be accessed by an electronic device, including a volatile and non-volatile media, a removable media or an non-removable media. The computer-readable storage media includes, but is not limited to, any type of disks (including floppy disk, hard disk, CD-ROM, CD-ROM, and magnetic disk), ROM, RAM, Erasable Programmable Read-Only Memory (EPROM), Electrically Erasable Programmable Read Only Memory (EEPROM), flash memory, magnetic card, or light card. That is, the computer-readable storage media includes any media on which information is stored or transmitted by a device (for example, a computer) in a form capable of being read.

The electronic device according to the embodiment may include a transceiver. The transceiver may be used for receiving and transmitting a signal. The transceiver may allow the electronic device to communicate wirelessly or wired with other devices to exchange data. It is noted that the transceiver is not limited to one in practical applications.

According to an embodiment, the electronic device may further include an input unit. The input unit may be used to receive an input digital, character, image, and/or sound information, or to generate a key signal input related to a user setting and functional control of the electronic device. The input unit may include, but is not limited to, one or more of a touch screen, physical keyboard, function key (e.g., volume control button, switch button, etc.), trackball, mouse, joystick, shooting device, sound pickup, etc.

According to an embodiment, the electronic device may further include an output unit. The output unit may be used to output or display information that has been processed by a processor. The output unit may include, but is not limited to, one or more of a display device, a speaker 5, a vibration device, etc.

The computer-readable storage medium according to an embodiment of the present application is suitable for various optional implementations of any of the above sound processing methods, which is not repeated herein.

When embodiments of the present application are applied, at least the following beneficial effects may be achieved.
1. The sound collection device 1 uses an even number of silicon-based microphone chips to collect ambient sound, and among the acoustic cavities used to conduct the ambient sound to the corresponding silicon-based microphone chips, at least two of the acoustic cavities have different volumes and/or shapes. Thus, it may contribute to generation of a path difference in the aforementioned at least two acoustic cavities for the near-field sound in the ambient sound. That is, the near-field sound acts on the corresponding two silicon-based microphone chips with a different amplitude or phase and thus the near-field sound on the corresponding two silicon-based microphone chips may not be counteracted each other. However, the far-field sound in the ambient sound does not generate a significant path difference in the aforementioned at least two acoustic cavities. That is, it may deem that the far-field sound acts on the corresponding two silicon-based microphone chips with a same amplitude or phase and thus the far-field sound on the corresponding two silicon-based microphone chips may be counteracted each other. Therefore, the sound collection device 1 according to the embodiments of the present application may more easily output only the near-field audio reference signal according to the collected ambient sound, or more easily output only the near-field audio reference signal with the cooperation of subsequent signal processing apparatus.
2. The partition plate 50 of the housing 20 may provide a mounting position for the silicon-based microphone device 10. The partition plate aperture provided on the partition plate 50 may constitute the sound channel of the housing 20 that is communicated with the sound inlet hole in one-to-one correspondence. That is, the partition plate aperture may form at least part of the sound channel. Moreover, the partition plate aperture is communicated with at least one of the sound inlet holes so as to contribute to generation of distinction in volume and/or shape for at least two acoustic cavities.
3. The transition plate 60 in the housing 20 may be a connecting structure between the silicon-based microphone device 10 and the partition plate 50, and the transition plate aperture provided on the transition plate 60 may constitute the sound channel of the housing 20 that is communicated with the sound inlet hole in one-to-one correspondence. That is, the transition plate aperture may form at least part of the sound channel. Moreover, the transition plate aperture is communicated with at least one of the sound inlet holes so as to contribute to generation of distinction in volume and/or shape for at least two acoustic cavities.
4. The cover plate 30 or the wall plate 40 of the housing 20 is provided with a housing aperture. The housing aperture may be communicated with the partition plate aperture. That is, the housing aperture may also form a part of the sound channel. On one hand, the housing aperture may contribute to generation of distinction in volume and/or shape for at least two acoustic cavities. On the other hand, the housing aperture may contribute to the ambient sound entering the acoustic cavities directly through air propagation, and eventually acting on the silicon-based microphone chips.
5. The even number of sound inlet holes provided on the circuit board 100 of the silicon-based microphone device 10 may be more easily paired with the even number of transition plate apertures. The even number of transition plate apertures allows a bigger space for each of two sound channels communicated with each of two sound inlet holes in one-to-one correspondence. In this way, there may be more choice when generating distinction in volume and/or shape for the two acoustic cavities. For example, size and shape of the corresponding two transition plate apertures are changed to be different.
6. The even number of sound inlet holes provided on the circuit board 100 of the silicon-based microphone device 10 may be more easily paired with the even number of partition plate apertures through the even number of transition plate apertures. The even number of partition plate apertures allows a bigger space for each of two sound channels communicated with each of two sound inlet holes in one-to-one correspondence. In this way, there may be more choice when generating distinction in volume and/or shape for the two acoustic cavities. For example, size and shape of the corresponding two partition plate apertures are changed to be different.
7. The even number of sound inlet holes provided on the circuit board 100 of the silicon-based microphone device 10 may be more easily paired with the even number of housing apertures through the even number of transition plate apertures and the even number of partition plate apertures. The even number of housing apertures allows a bigger space for each of two sound channels communicated with each of two sound inlet holes in one-to-one correspondence. In this way, there may be more choice when generating distinction in volume and/or shape for the two acoustic cavities. For example, size or shape of the corresponding two housing apertures are changed to be different.
8. The connection ring 70 may, on one hand, provide a connection between any two adjacent structures among the circuit board 100 of the silicon-based microphone device 10, the transition plate 60, the partition plate 50, the cover 30 or the wall plate 40 of the housing 20; and, on the other hand, may improve the air-tightness of the sound channel constructed together by the aperture of each of the structures, and improve fidelity or accuracy of the sound waves reaching the silicon-based microphone chip in the silicon-based microphone device 10 through the acoustic cavity.
9. The partition plate 50 of the housing 20 may provide a mounting position for the silicon-based microphone device 10. The partition plate sink 52 provided in the partition plate 50 may constitute the sound channel of the housing 20 that is communicated with the sound inlet hole in one-to-one correspondence. The other end of the partition plate sink 52 is communicated with the sound isolation cavity 22. That is, both the partition plate sink 52 and the sound isolation cavity 22 may form at least part of the sound channel. Moreover, the partition plate sink 52 is communicated with at least one of the sound inlet holes so as to contribute to generation of distinction in volume and/or shape for at least two acoustic cavities. In addition, the partition plate 50 is connected between the inner wall of the cover plate 30 and a part of the circuit board 100, or, the partition plate 50 is connected between the inner wall of the wall plate 40 and a part of the circuit board 100. That is, the remaining part of the circuit board 100 is not connected to the partition plate 50, and the empty space 23 may be formed between the remaining part of the circuit board 100 and the inner wall of the cover 30 or the inner wall of the wall plate 40. The sound inlet hole provided on the remaining part of the circuit board 100 may be communicated with the empty space 23, and the empty space 23 is easily communicated with the sound isolation cavity 22. In other words, the empty space 23 and the sound isolation cavity 22 may constitute at least part of another sound channel, so as to contribute to generation of distinction in volume and/or shape for at least two acoustic cavities.
10. Difference in volume and/or shape for at least two acoustic cavities may be easily realized by changing size of aperture diameter of each aperture constituting the sound channel.
11. The silicon-based microphone device 10 may use an even number of differential silicon-based microphone chips 300, and may output directly only the near-field audio reference signal according to the collected ambient sound by its own structure.
12. By using the microphone 3 to collect the ambient sound and performing the acousto-electric conversion thereon to obtain a mixed audio signal; using the sound collection device 1 according to the embodiments of the present application to obtain, or in cooperation with, for example, the echo processor 2 to obtain the near-field audio reference signal; and using the near-field audio reference signal as a noise reference signal, it is more easily or more accurately to remove the near-field audio signal from the mixed audio signal to obtain the far-field audio signal, thereby improving the accuracy of the far-field audio signal greatly.

It will be understood by those skilled in the art that steps, measures, and schemes in the operations, methods, and process already discussed in the present application may be alternated, changed, combined, or deleted. Further, other steps, measures, and schemes in the operations, methods, and process already discussed in the present application may also be alternated, changed, rearranged, disassembled, combined, or deleted. Further, steps, measures, and schemes in the operations, methods, and process of the prior art having the same disclosed in the present application may also be alternated, changed, rearranged, disassembled, combined, or deleted.

In the description of the present application, it may be understood that the terms "center", "upper", "lower", "front", "back", "left", "right", "vertical", "horizontal", "top", "bottom", "inside", "outside", etc. indicate the orientation or positional relationships are based on the orientation or positional relationships shown in the accompanying drawings and are intended only to facilitate and simplify the description of the present application, not to indicate or imply that the device or element referred to must have a particular orientation, be constructed and operated in a particular orientation, and therefore are not to be construed as limiting the present application.

The terms "first" and "second" are used for descriptive purposes only, and are not to be construed as indicating or implying relative importance or implicitly specifying the number of technical features indicated. Thus, features limited with "first" and "second" may explicitly or implicitly include one or more such features. In the description of the present application, unless otherwise specified, "a plurality of" means two or more.

In the description of the present application, it is to be noted that, unless otherwise expressly specified and limited, terms "mounted", "connected to", "connected" are to be understood in a broad sense, for example, it may be a fixed connection, a removable connection, or a one-piece connection; it may be a direct connection, or an indirect connection through an intermediate medium, or it may be a connection within two components. For a skilled in the art, the specific meaning of the above terms in the context of the present application may be understood according to specific situations.

In the description of this specification, specific features, structures, materials, or characteristics may be combined in a suitable manner in any one or more embodiments or examples.

It should be understood that although the individual steps in the flowchart of the accompanying drawings are shown sequentially as indicated by the arrows, the steps are not necessarily executed sequentially in the order indicated by the arrows. Except as expressly stated herein, there is no strict sequential limitation on execution of these steps, which may be performed in any other order. Moreover, at least some of the steps in the flowchart of the accompanying drawings may include a plurality of sub-steps or a plurality of phases, which are not necessarily performed at the same time, but may be performed at different moments, and are not necessarily sequentially performed, but may be performed in rotation or alternately with other steps or at least some of the sub-steps or phases of other steps.

The above is only portion of the implementation of the present application, it should be noted for the skilled in the art that, without departing from the principle of the present application, a number of improvements and embellishments may be allowable, and these improvements and embellishments should also be considered as the scope of protection of the present application.

## Claims

1. A sound collection device, comprising a housing and a silicon-based microphone device located within the housing;
wherein the silicon-based microphone device comprises a circuit board and an even number of silicon-based microphone chips provided on one side of the circuit board; the circuit board is provided with an even number of sound inlet holes, and the even number of sound inlet holes are communicated with back cavities of the even number of silicon-based microphone chips in one-to-one correspondence;
the housing is provided with a sound channel in communication with a corresponding one of the sound inlet holes in one-to-one correspondence;
the correspondingly communicated back cavity and sound inlet hole form an acoustic cavity; or, the correspondingly communicated back cavity, sound inlet hole and sound channel form an acoustic cavity; and
at least two acoustic cavities have different volumes and/or shapes.

2. The sound collection device according to claim 1, wherein the housing comprises a cover plate, a wall plate and a partition plate;
wherein the cover plate is coupled to the wall plate to form a sound isolation chamber;
the partition plate is connected between the circuit board and an inner wall of the cover plate, or, the partition plate is connected between the circuit board and an inner wall of the wall plate; and
the partition plate is provided with at least one partition plate aperture constituting the sound channel; and the partition plate aperture is communicated with at least one of the sound inlet holes.

3. The sound collection device according to claim 2, wherein the housing further comprises a transition plate; and
wherein the transition plate is connected between the circuit board and the partition plate; and
the transition plate is provided with at least one transition plate aperture constituting the sound channel; and the transition plate aperture is communicated with the at least one of the sound inlet holes and the at least one partition plate aperture.

4. The sound collection device according to claim 3, wherein the cover plate or the wall plate is provided with at least one housing aperture; and
the housing aperture is communicated with the at least one partition plate aperture.

5. The sound collection device according to claim 4, wherein the transition plate aperture is provided in an even number of transition plate apertures, communicated with the even number of sound inlet holes in one-to-one correspondence.

6. The sound collection device according to claim 5, wherein the partition plate aperture is provided in an even number of partition plate apertures, communicated with the even number of transition plate apertures in one-to-one correspondence.

7. The sound collection device according to claim 6, wherein the housing aperture is provided in an even number of housing apertures, communicated with the even number of partition plate apertures in one-to-one correspondence.

8. The sound collection device according to any one of claims 1-7, wherein, the housing further comprises a connection ring having at least one of the following arrangements:
the connection ring being connected between one of the sound inlet holes of the circuit board and the transition plate aperture of the transition plate, so that an airtight sound channel is formed between the one of the sound inlet holes and the transition plate aperture;
the connection ring being connected between one of the sound inlet holes of the circuit board and the transition plate, so that an airtight sound channel is formed between the one of the sound inlet holes and the transition plate;
the connection ring being connected between the transition plate aperture of the transition plate and the partition plate aperture of the partition plate, so that an airtight sound channel is formed between the transition plate aperture and the partition plate aperture;
the connection ring being connected between the transition plate aperture of the transition plate and the partition plate, so that an airtight sound channel is formed between the transition plate aperture and the partition plate;
the connection ring being connected between the partition plate aperture of the partition plate and the housing aperture, so that an airtight sound channel is formed between the partition plate aperture and the housing aperture;
the connection ring being connected between the partition plate aperture of the partition plate and the cover plate, so that an airtight sound channel is formed between the partition plate aperture and the cover plate; or, the connection ring being connected between the partition plate aperture of the partition plate and the wall plate, so that an airtight sound channel is formed between the partition plate aperture and the wall plate.

9. The sound collection device according to claim 1, wherein the housing comprises a cover plate, a wall plate and a partition plate; and
wherein the cover plate is coupled to the wall plate to form a sound isolation chamber;
the partition plate is connected between an inner wall of the cover plate and a part of the circuit board, or, the partition plate is connected between an inner wall of the wall plate and a part of the circuit board;
the partition plate is provided with at least one partition plate sink constituting the sound channel; and
one end of the partition plate sink is communicated with at least one of the sound inlet holes; and the other end of the partition plate sink is communicated with the sound isolation chamber.

10. The sound collection device according to claim 9, wherein the cover plate or the wall plate is provided with at least one housing aperture; and
the housing aperture is communicated with the sound isolation chamber.

11. The sound collection device according to any one of claims 1-7, 9 and 10, wherein at least two of aperture diameter of the sound inlet holes, aperture diameter of the transition plate aperture, aperture diameter of the partition plate aperture and aperture diameter of the housing aperture have different sizes.

12. The sound collection device according to any one of claims 1-7, 9 and 10, wherein the silicon-based microphone chips are differential silicon-based microphone chips; and
among every two of the differential silicon-based microphone chips, a first microphone structure of one of the differential silicon-based microphone chips is electrically connected to a second microphone structure of the other one of the differential silicon-based microphone chips, and a second microphone structure of the one of the differential silicon-based microphone chips is electrically connected to a first microphone structure of the other one of the differential silicon-based microphone chips.

13. A sound processing apparatus, comprising a microphone, an echo processor, and a sound collection device as claimed in any one of claims 1-12;
wherein an output end of the microphone is electrically connected to an input end of the echo processor, and an output end of the sound collection device is electrically connected to another input end of the echo processor, and an output end of the echo processor is configured to output a far-field audio signal.

14. The sound processing apparatus according to claim 13, wherein the sound processing apparatus further comprises a filter comprising an input end electrically connected to an output end of the sound collection device and an output end electrically connected to another input end of the echo processor;
and/or, the sound processing apparatus further comprises a speaker electrically connected to the output end of the echo processor.

15. A sound processing method, comprising:
obtaining a real-time near-field audio reference signal by using a sound collection device as claimed in any one of claims 1-12;
obtaining a real-time mixed audio signal; and
removing a real-time near-field audio signal from the real-time mixed audio signal according to the real-time near-field audio reference signal to obtain a real-time far-field audio signal.

16. A sound processing apparatus, comprising:
an audio signal collection module configured to obtain a real-time near-field audio reference signal and a real-time mixed audio signal; and
an audio signal processing module configured to remove a real-time near-field audio signal from the real-time mixed audio signal according to the real-time near-field audio reference signal to obtain a real-time far-field audio signal.

17. A computer-readable storage medium, having a computer program stored thereon, wherein the computer program, when executed by an electronic device, implements a sound processing method as claimed in claim 15.
